# EUROPÄISCHE PATENTSCHRIFT

(11) **EP 1 335 222 B1**
(45) Veröffentlichungstag und Bekanntmachung des Hinweises auf die Patenterteilung: **29.06.2005**
(21) Anmeldenummer: 02405090.8
(22) Anmeldetag: 08.02.2002
(51) Int. Cl.: G02B 6/38

(54) **Steckerteil für eine optische Steckverbindung**
Plug part for an optical connection
Partie d'un fiche pour une connection optique

(43) Veröffentlichungstag der Anmeldung: 13.08.2003
(73) Patentinhaber: Diamond SA, 6616 Losone (CH)
(72) Erfinder: De Marchi, Silverio, 6612 Ascona (CH)
(74) Vertreter: Wenger, René

(56) Entgegenhaltungen:
- EP-A- 0 624 810
- EP-A- 0 997 757
- EP-A- 1 115 014
- FR-A- 2 612 302
- US-A- 5 179 608
- US-A- 5 390 270
- US-A- 5 732 175
- PATENT ABSTRACTS OF JAPAN vol. 2000, no. 05, 14. September 2000 (2000-09-14) -& JP 2000 039538 A (FURUKAWA ELECTRIC CO LTD:THE;AMP JAPAN LTD), 8. Februar 2000 (2000-02-08)

## Beschreibung

Die Erfindung betrifft ein Steckerteil für eine optische Steckverbindung gemäss dem Oberbegriff von Anspruch 1. Bei derartigen Steckerteilen bewirkt die axiale Federvorspannung des Steckerstifts, dass im gesteckten Zustand die Lichtübertragung auch bei Toleranzabweichungen oder bei Zugkräften am Kabel gewährleistet ist. Die Führungshülse dient dabei auch der Begrenzung des Federwegs und der radialen Positionierung des Steckerstifts.

Es sind bereits zahlreiche Lösungen zur federnden Lagerung des Steckerstifts bekannt. In den meisten Fällen ist dabei der Stekkerstift in eine Stifthalterung eingelegt, welche dann ihrerseits in der Führungshülse gehalten und geführt ist. So zeigt beispielsweise die CH-A-689 316 eine Stifthalterung, die über einen als Federelement ausgebildeten Verbindungsabschnitt einstückig mit einem Kalbelaufnahmeelement ausgebildet ist. Dieses wird in eine Führungshülse eingesetzt, das den inneren Gehäuseteil eines Push-Pull-Steckers bildet.

Gemäss der EP-A-1,115,014 ist die Stifthalterung ein separates Teil, das in der Führungshülse drehfest und verschiebbar gelagert ist. Die Führungshülse ist unter Einschluss einer Schraubendruckfeder mit einem Gehäuseabschlussteil verschlossen, an dem die ganze Einheit in ein Aussengehäuse eingesetzt werden kann.

Es sind aber auch bereits Lösungen bekannt, bei denen der Stekkerstift ohne Stifthalterung direkt in einer Führungshülse gelagert ist. So zeigt die EP-A-601 976 eine Führungshülse, die aus zwei miteinander verschraubbaren Hülsenteilen besteht. Die beiden Hülsenteile halten gleichzeitig eine U-förmige Gabel, welche in eine Aussparung am Steckerstift eingreift und dadurch dessen Relativlage und Federweg begrenzt.

Schliesslich ist in Patent Abstracts of Japan Vol. 2000, No. 05 vom 14.09.2000 (= JP 2000-39538A) ein optischer Stecker dargestellt, bei dem der gefederte Steckerstift in einer Anschlaghülse gehalten ist. Diese Anschlaghülse ist entweder in Längsrichtung durchgehend geschlitzt oder sie besteht aus zwei Halbschalen und sie kann nach der Aufnahme des Steckerstifts und der Feder in das Steckergehäuse eingesetzt werden.

Die bekannten Lösungen erfordern teilweise aufwendige Montagearbeiten und sie sind nicht für alle Steckertypen gleichermassen geeignet. Es ist daher eine Aufgabe der Erfindung, ein Steckerteil der eingangs genannten Art zu schaffen, das schnell und einfach montierbar ist und das möglichst wenige Einzelteile aufweist.

Das Steckerteil soll nach Möglichkeit für den Bau ganz unterschiedlicher optischer Stecker eingesetzt werden können und schliesslich sollen Schraub- bzw. Klebeoperationen bei der Montage vermieden werden.

Diese Aufgabe wird erfindungsgemäss mit einem Steckerteil gelöst, das die Merkmale im Anspruch 1 aufweist. Die Ausbildung der Führungshülse aus wenigstens zwei entlang der Längsmittelachse zusammensetzbaren Schalenteilen vereinfacht die Montage erheblich und reduziert die Anzahl der nötigen Bauteile. Der Steckerstift und die erforderliche Druckfeder können direkt zwischen den Schalenteilen eingeschlossen werden, ohne dass aufwendige Schraubverbindungen erforderlich sind.

Zur Sicherung der Führungshülse im Steckergehäuse ist wenigstens ein konischer Abschnitt auf der Aussenseite der Führungshülse vorgesehen, der in eine korrespondierende Konusaufnahme im Stekkergehäuse einpressbar ist. Je nach Konuswinkel, Materialelastizität und Oberflächengüte kann damit eine selbsthemmende, reibschlüssige Verbindung erzielt werden, welche bei normaler Beanspruchung des Steckerteils nicht mehr gelöst werden kann. Die konische Klemmverbindung hat den Vorteil, dass sie sehr einfach hergestellt werden kann und dass die Bauteile insgesamt vereinfacht werden. Als besonders vorteilhaft hat sich zum Beispiel ein Konusanzug von 1:30 bewährt. Ausserdem ist zumindest der konische Abschnitt an der Führungshülse mit einer praktisch spiegelglatten Oberfläche versehen. Bei der korrespondierenden Konusaufnahme im Steckergehäuse muss es sich nicht zwingend um eine konische Bohrung von gleicher Länge wie der Konusabschnitt an der Führungshülse handeln.

Die Führungshülse besteht dabei vorzugsweise aus zwei identischen Schalenteilen, die auf einer durch die Längsmittelachse verlaufenden Ebene zusammensetzbar sind. Die Herstellungskosten können dadurch erheblich reduziert werden, weil mit einem einzigen Schalentyp paarweise eine Führungshülse herstellbar ist.

Die Führungshülse könnte sich aber auch aus mehr als zwei Schalenteilen zusammensetzen und diese müssten nicht zwingend identisch ausgebildet sein. Ausserdem müssten die Schalenteile nicht zwingend auf einer durch die Längsmittelachse verlaufenden Ebene aneinander stossen. Die Berührungsebene könnte auch schraubenlinienförmig verlaufen.

Vorzugsweise können benachbarte Schalenteile an ihren Berührungsflächen ineinandergreifende Vorsprünge und Ausnehmungen aufweisen. Bei identischen Schalenteilen sind diese hermaphroditisch ausgebildet, so dass jedes Schalenteil sowohl Vorsprünge, als auch Ausnehmungen aufweist.

Die Vorsprünge und Ausnehmungen können derart ausgestaltet sein, dass die Schalenteile durch Pressitz oder gar durch eine Schnappverbindung zusammenhalten. Bei den Vorsprüngen und Ausnehmungen kann es sich wenigstens teilweise um Zapfen und korrespondierende Zapfenöffnungen handeln, welche derart konisch ausgebildet sind, dass die Schalenteile zusammenhalten. Der Konuswinkel muss dabei ersichtlicherweise so ausgebildet sein, dass Selbsthemmung eintritt.

Die Schalenteile können aber auch lose zusammengefügt sein. Insbesondere für Montagezwecke ist es jedoch in jedem Fall vorteilhaft, wenn die Schalenteile durch wenigstens eine sie umgebende Manschette lösbar zusammengehalten sind. Eine derartige Manschette kann beispielsweise an einem Endabschnitt über die Schalenteile gestreift werden.

Eine besonders vorteilhafte Lagerung des Steckerstifts ergibt sich, wenn auf der Innenseite wenigstens eines Schalenteils eine Rippe angeordnet ist, welche derart in eine Aussparung im Aussenmantel des Steckerstifts eingreift, dass sein Federweg begrenzt ist und dass er drehfest gehalten ist. Auf diese Weise ist keine separate Stifthalterung erforderlich, welche der Führung des Steckerstifts dient. Der relativ heikle Klebevorgang für den Steckerstift wird damit vermieden. Der Steckerstift besteht wenigstens an seinem Aussenmantel aus sehr hartem Material, wie z.B. keramisches Material. Die Aussparung lässt sich direkt bei der Herstellung des Steckerstifts anbringen, so dass keine nachträgliche Bearbeitung mehr erforderlich ist. Eine ähnliche Stiftführung ist im Zusammenhang mit einer konventionellen Führungshülse bereits durch die eingangs erwähnte EP-A-601,976 bekannt geworden.

Für die winkelmässige Positionierung des Steckerstifts vor dem Steckvorgang ist es besonders zweckmässig, wenn der Steckerstift oder ein mit dem Steckerstift verbundenes Bauteil wenigstens eine Auflaufflanke aufweist, welche zu einer durch die Längsmittelachse verlaufenden Ebene geneigt ist und welche zum Bestimmen der Drehlage des Steckerstifts unter der Einwirkung der Federkraft gegen eine Auflaufkante oder Auflauffläche auf der Innenseite wenigstens eines Schalenteils pressbar ist. Dadurch ist gewährleistet, dass der Steckerstift stets die gleiche Ausgangslage einnimmt, bevor er gegen die Federkraft zurückgepresst wird.

Vorzugsweise bilden die Schalenteile auf der Innenseite auch ein Widerlager, an dem eine den Steckerstift direkt oder indirekt beaufschlagende Schraubendruckfeder abgestützt ist. Das Widerlager kann dabei die Form eines umlaufenden Kragens aufweisen. Anstelle der Schraubendruckfeder wären in bestimmten Fällen auch andere Federelemente denkbar.

Auf der Aussenseite der Führungshülse kann zur drehfesten Lagerung im Steckergehäuse ein Positionierabschnitt angeordnet sein. Die radiale Relativlage zwischen Führungshülse und Steckergehäuse ist dabei an einem komplementären Positionierabschnitt am Steckergehäuse festgelegt. Das Steckergehäuse selbst dient dem Schutz des Steckerstifts und der zugfesten Verriegelung in einem Buchsenteil.

Bei Steckerteilen für polarisierte Fasern ist es zweckmässig, wenn die Führungshülse in jeder beliebigen radialen Relativlage drehfest in das Steckergehäuse einsetzbar ist. So kann vorgängig an einem Manipulator der optimale Übertragungswert auf einen Bruchteil von Winkelgraden genau ermittelt werden, bevor die Endmontage in der ausgewählten Lage erfolgt.

Die Schalenteile sind vorteilhaft als Spritzgussteile aus Kunststoffmaterial gefertigt. Diese lassen sich besonders kostengünstig und mit geeigneter Präzision herstellen. Unter bestimmten Voraussetzungen wären aber auch keramische oder metallische Werkstoffe denkbar.

Ein Ausführungsbeispiel der Erfindung ist in den Zeichnungen dargestellt und wird nachstehend genauer beschrieben. Es zeigen:
- Figur 1: eine perspektivische Darstellung der Einzelteile eines Steckerteils ohne Steckgehäuse,
- Figur 2: die Einzelteile gemäss Figur 1 nach einem ersten Montageschritt,
- Figur 3: das fertig montierte Steckerteil gemäss Figur 1 vor dem Einführen in ein Steckergehäuse, und
- Figur 4: ein Längsschnitt durch den fertig montierten Stecker gemäss Figur 3.

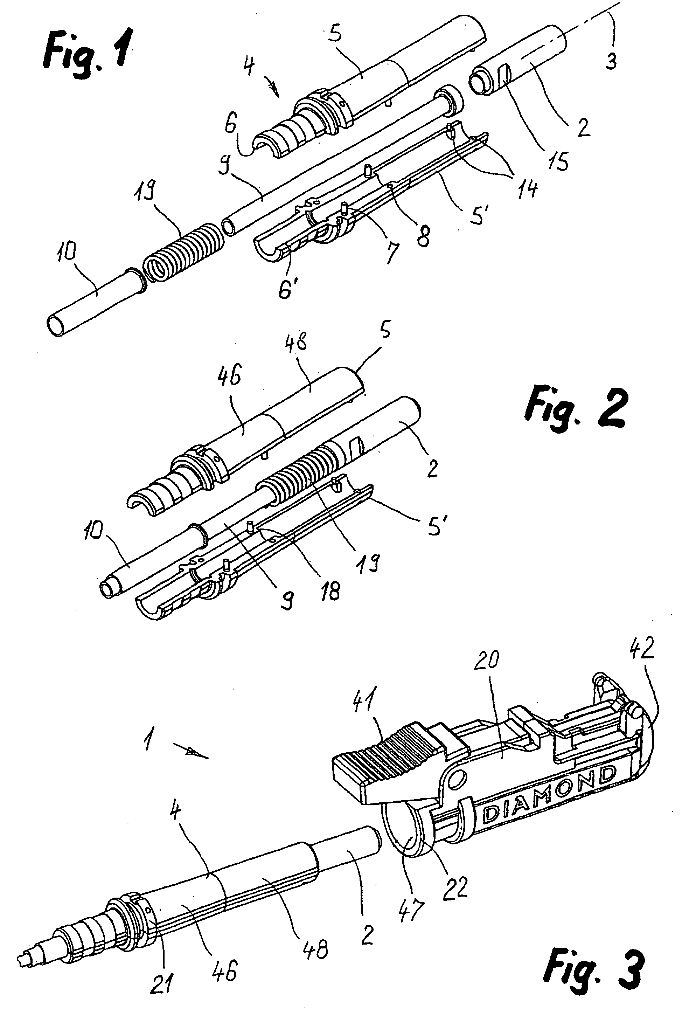

Wie in Fig. 1 dargestellt, besteht ein Steckerteil 1 aus zwei identisch ausgebildeten Schalenteilen 5, 5', die an ihren Berührungsflächen 6 Zapfen 7 und Zapfenöffnungen 8 aufweisen. Da die Schalenteile hermaphroditisch ausgebildet sind, können je zwei identische Schalenteile zu einer Führungshülse 4 (Figur 3) zusammengefügt werden.

In dieser Führungshülse ist ein Steckerstift 2 und eine Schraubendruckfeder 19 gehalten. Eine Kabelhülse 9 und eine Kabelendhülse 10 sorgen dafür, dass das hier nicht dargestellte Lichtwellenleiterkabel geschützt im Zentrum verläuft bzw., dass allfällige Knickkräfte vermieden werden.

Auf der Innenseite jedes Schalenteils sind einander diametral gegenüberliegende tangentiale Rippen 14 angeordnet. Diese greifen in korrespondierende Aussparungen 15 am Steckerstift 2, wobei die Breite der Aussparungen grösser ist als die Breite der Rippen, so dass der Steckerstift in Richtung der Längsmittelachse 3 einen bestimmten Federweg zurücklegen kann. Der Steckerstift 2 wird mittels der Schraubendruckfeder 19 in den Aussparungen 15 gegen die Rippen 14 gepresst, wobei sich die Schraubendruckfeder an einem Widerlager 18 (Fig. 2) abstützt.

Figur 2 zeigt den eingelegten Steckerstift mit der Schraubendruckfeder am Schalenteil 5' vor dem Schliessen der Führungshülse mit dem Schalenteil 5.

Für die Fixierung der Führungshülse in einem Steckergehäuse sind keine besonderen Bauteile vorgesehen. Die einzige Massnahme besteht darin, dass auf der Aussenseite der Führungshülse ein konischer Abschnitt 46 angeordnet ist, der in einen zylindrischen Abschnitt 48 übergeht.

Auf der Innenseite des Steckergehäuses ist eine Konusaufnahme 47 vorgesehen, wie aus Figur 3 ersichtlich ist. Nach der korrekten radialen Positionierung der Führungshülse 4 wird diese in das Steckergehäuse 20 eingepresst, womit eine intensive Klemmverbindung hergestellt wird. An der Führungshülse kann dabei ein Positionierabschnitt 21 für die radiale Positionierung vorgesehen sein, der mit einem komplementären Abschnitt 22 am Steckergehäuse zusammenwirkt. Alternativ ist es aber möglich, eine beliebige radiale Position auszuwählen.

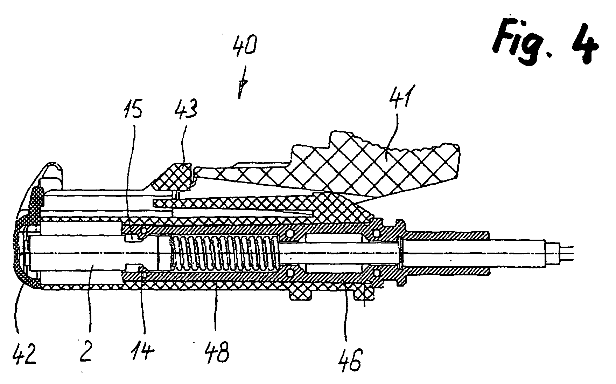

Figur 4 zeigt die in das Steckergehäuse eingepresste Führungshülse. Ebenfalls deutlich sichtbar ist hier die relativ zu den beiden Halbschalen der Führungshülse axial verschiebbare Lagerung des Steckerstifts 2. Dieser kann gegen die Kraft der Schraubendruckfeder 19 zurückgeschoben werden, bis die Rippen 14 an der gegenüberliegenden Wand der Aussparung 15 anschlagen.

Aus den Figuren 3 und 4 sind schliesslich auch noch andere Elemente des insgesamt mit 40 bezeichneten optischen Steckers ersichtlich. Im vorliegenden Fall ist an der Gehäusestirnseite eine Schutzklappe 42 angeordnet, welche beim Einstecken des Stekkers in eine Buchse selbständig öffnet. Zur Verriegelung in der Buchse dient eine Sperrleiste 43, an der eine entsprechende Sperrklinke einrasten kann. Zum Lösen der Verriegelung ist ein Entriegelungshebel 41 vorgesehen.

## Patentansprüche

1. Steckerteil (1) für eine optische Steckverbindung, mit einem Steckergehäuse (20) und mit wenigstens einem zylindrischen Steckerstift (2), der unter axialer Federvorspannung entlang seiner Längsmittelachse (3) begrenzt verschiebbar in einer Führungshülse (4) gehalten ist, wobei die Führungshülse (4) aus wenigstens zwei Schalenteilen (5, 5') besteht, die entlang der Längsmittelachse (3) zusammensetzbar sind, **dadurch gekennzeichnet, dass** die Führungshülse drehfest im Stecker gehäuse eingesetzt ist, wobei zur Sicherung der Führungshülse im Steckergehäuse wenigstens ein konischer Abschnitt (46) auf der Aussenseite der Führungshülse vorgesehen ist, der in eine korrespondierende Konusaufnahme (47) im Steckergehäuse einpressbar ist.

2. Steckerteil nach Anspruch 1, **dadurch gekennzeichnet, dass** die Führungshülse (4) aus zwei identischen Schalenteilen (5, 5') besteht, die auf einer durch die Längsmittelachse (3) verlaufenden Ebene zusammensetzbar sind.

3. Steckerteil nach Anspruch 1 oder 2, **dadurch gekennzeichnet, dass** benachbarte Schalenteile an ihren Berührungsflächen (6, 6') ineinander greifende Vorsprünge (7) und Ausnehmungen (8) aufweisen.

4. Steckerteil nach Anspruch 3, **dadurch gekennzeichnet, dass** es sich bei den Vorsprüngen und Ausnehmungen wenigstens teilweise um Zapfen und korrespondierende Zapfenöffnungen handelt, welche derart konisch ausgebildet sind, dass die Schalenteile zusammenhalten.

5. Steckerteil nach einem der Ansprüche 1 bis 4, **dadurch gekennzeichnet, dass** die Schalenteile (5) durch wenigstens eine sie umgebende Manschette lösbar zusammengehalten sind.

6. Steckerteil nach einem der Ansprüche 1 bis 5, **dadurch gekennzeichnet, dass** auf der Innenseite wenigstens eines Schalenteils eine Rippe (14) angeordnet ist, welche derart in eine Aussparung (15) im Aussenmantel des Steckerstifts (2) eingreift, dass sein Federweg begrenzt ist und dass er drehfest gehalten ist.

7. Steckerteil nach einem der Ansprüche 1 bis 6, **dadurch gekennzeichnet, dass** der Steckerstift oder ein mit dem Stekkerstift verbundenes Bauteil wenigstens eine Auflaufflanke aufweist, welche zu einer durch die Längsmittelachse verlaufenden Ebene geneigt ist und welche zum Bestimmen der Drehlage des Steckerstifts unter der Einwirkung der Federkraft gegen eine Auflaufkante oder Auflauffläche auf der Innenseite wenigstens eines Schalenteils pressbar ist.

8. Steckerteil nach einem der Ansprüche 1 bis 7, **dadurch gekennzeichnet, dass** die Schalenteile (5, 5') auf der Innenseite ein Widerlager (18) bilden, an dem eine den Steckerstift (2) direkt oder indirekt beaufschlagende Schraubendruckfeder (19) abgestützt ist.

9. Steckerteil nach einem der Ansprüche 1 bis 8, **dadurch gekennzeichnet, dass** auf der Aussenseite der Führungshülse (4) weiterhin ein Positionierabschnitt (21) angeordnet ist und dass die radiale Relativlage zwischen Führungshülse und Steckergehäuse an einem komplementären Positionierabschnitt (22) am Steckergehäuse auf eine Lage festgelegt ist.

## Claims

1. Plug part (1) for an optical connection, having a plug housing (20) and having at least one cylindrical plug pin (2), which is held in a guide sleeve (4) such that it can be displaced to a limited extent along its longitudinal central axis (3) with axial spring prestress, the guide sleeve (4) comprising at least two shell parts (5, 5'), which can be joined together along the longitudinal central axis (3), **characterized in that** the guide sleeve is inserted in the plug housing such that it is fixed against rotation, at least one conical section (46) being provided on the outside of the guide sleeve for the purpose of securing the guide sleeve in the plug housing, it being possible for said conical section to be pressed into a corresponding conical receiving part (47) in the plug housing.

2. Plug part according to Claim 1, **characterized in that** the guide sleeve (4) comprises two identical shell parts (5, 5'), which can be joined together on a plane extending through the longitudinal central axis (3).

3. Plug part according to Claim 1 or 2, **characterized in that** adjacent shell parts have, on their mating surfaces (6, 6'), projections (7) and recesses (8) engaging in one another.

4. Plug part according to Claim 3, **characterized in that** at least some of the projections and recesses are pins and corresponding pin openings, which are conical such that the shell parts are held together.

5. Plug part according to one of Claims 1 to 4, **characterized in that** the shell parts (5) are detachably held together by means of at least one collar surrounding them.

6. Plug part according to one of Claims 1 to 5, **characterized in that** a rib (14) is arranged on the inside of at least one shell part and engages in a cutout (15) in the outer casing of the plug pin (2) such that its spring path is limited and such that it is held such that it is fixed against rotation.

7. Plug part according to one of Claims 1 to 6, **characterized in that** the plug pin or a component connected to the plug pin has at least one run-up flank, which is inclined with respect to a plane extending through the longitudinal central axis and which can be pressed, with the action of the spring force, against a run-up edge or run-up surface on the inside of at least one shell part for the purpose of determining the rotational position of the plug pin.

8. Plug part according to one of Claims 1 to 7, **characterized in that** the shell parts (5, 5') form an abutment (18) on the inside, a helical compression spring (19) which acts directly or indirectly on the plug pin (2) being supported on said abutment (18).

9. Plug part according to one of Claims 1 to 8, **characterized in that** a positioning section (21) is also arranged on the outside of the guide sleeve (4), and **in that** the radial relative position between the guide sleeve and the plug housing is fixed in one position on a complementary positioning section (22) on the plug housing.

## Revendications

1. Elément connecteur (1) pour une connexion optique à fiches, comprenant une enveloppe de connecteur (20) et au moins une broche cylindrique (2) qui est retenue, mobile de manière limitée le long de son axe médian longitudinal (3), avec une contrainte élastique axiale, dans une douille de guidage (4), la douille de guidage (4) se composant d'au moins deux éléments formant coques (5, 5') qui sont aptes à être réunis le long de l'axe médian longitudinal (3), **caractérisé en ce que** la douille de guidage est placée fixe en rotation dans l'enveloppe de connecteur, étant précisé que pour le blocage de la douille de guidage dans l'enveloppe de connecteur, il est prévu sur le côté extérieur de la douille de guidage au moins une section conique (46) qui est apte à être enfoncée dans un logement conique correspondant (47) de l'enveloppe de connecteur.

2. Elément connecteur selon la revendication 1, **caractérisé en ce que** la douille de guidage (4) se compose de deux éléments formant coques identiques (5, 5') qui sont aptes à être réunis sur un plan traversant l'axe médian longitudinal (3).

3. Elément connecteur selon la revendication 1 ou 2, **caractérisé en ce que** les éléments formant coques voisins présentent sur leurs surfaces de contact (6, 6') des saillies (7) et des creux (8) qui s'emboîtent.

4. Elément connecteur selon la revendication 3, **caractérisé en ce que** les saillies et les creux sont constitués au moins en partie par des tiges et des ouvertures pour tiges correspondantes présentant une forme conique qui est telle que les éléments formant coques sont réunis.

5. Elément connecteur selon l'une des revendications 1 à 4, **caractérisé en ce que** les éléments formant coques (5) sont réunis de manière amovible grâce à au moins un manchon qui les entoure.

6. Elément connecteur selon l'une des revendications 1 à 5, **caractérisé en ce qu'**il est prévu sur le côté intérieur d'au moins un élément formant coque une nervure (14) qui pénètre dans un évidement (15) de la gaine extérieure de la broche (2) de telle sorte que la course élastique de celle-ci est limitée et que ladite broche est fixe en rotation.

7. Elément connecteur selon l'une des revendications 1 à 6, **caractérisé en ce que** la broche ou un élément relié à la broche présente au moins un flanc d'arrêt qui est incliné vers un plan traversant l'axe médian longitudinal et qui, pour définir la position de rotation de la broche, est apte à être pressé sous l'action de la force élastique contre un flanc d'arrêt ou une surface d'arrêt sur le côté intérieur d'au moins un élément formant coque.

8. Elément connecteur selon l'une des revendications 1 à 7, **caractérisé en ce que** les éléments formant coques (5, 5') forment sur leur côté intérieur une butée (18) contre laquelle s'appuie un ressort à boudin (19) qui contraint directement ou indirectement la broche (2).

9. Elément connecteur selon l'une des revendications 1 à 8, **caractérisé en ce qu'**il est également prévu, sur le côté extérieur de la douille de guidage (4), une section de positionnement (21) et **en ce que** la position relative radiale entre la douille de guidage et l'enveloppe de connecteur est bloquée au niveau d'une section de positionnement complémentaire (22) sur l'enveloppe de connecteur.
